# EUROPÄISCHE PATENTANMELDUNG

(11) **EP 2 064 933 A1**
(43) Veröffentlichungstag der Anmeldung: **03.06.2009**
(21) Anmeldenummer: 08019478.0
(22) Anmeldetag: 07.11.2008
(51) Int. Cl.: A01B 51/02

(54) **Fahrantrieb für Arbeitsgeräte**

(30) Priorität: 28.11.2007 DE 102007057655
(71) Anmelder: Robert Bosch GmbH, 70469 Stuttgart (DE)
(72) Erfinder: Jessen, Sönke, Dr., 71732 Tamm (DE)
(74) Vertreter: Thürer, Andreas

(57) **Zusammenfassung**

Offenbart ist eine Kombination aus einer mobilen Arbeitsmaschine und einem Arbeitsgerät, wobei das Arbeitsgerät ein Fahrwerk mit zumindest einem antreibbaren Rad (68) oder einer Walze aufweist, gekennzeichnet durch eine von der Fahrgeschwindigkeit der Kombination unabhängige Regelung des Drehmoments an dem zumindest einen antreibbaren Rad (68) oder an der Walze.

## Beschreibung

Die Erfindung betrifft eine Kombination aus einer mobilen Arbeitsmaschine und einem Arbeitsgerät, insbesondere Aufsattelgerät, oder Anhänger mit einem Fahrantrieb.

An mobile Arbeitsmaschinen wie z.B. Traktoren mit vorzugweise vier angetriebenen Rädern werden Anhänger oder über Hubwerke schwere Arbeitsgeräte angekuppelt, wobei letztere oft zusätzliche Stützräder haben, damit zumindest im Betrieb nicht die gesamte Gewichtskraft über das Hubwerk vom Traktor getragen werden muss. So kommen z.B. bei Pflügen zu der Gewichtskraft noch nach unten gerichtete Scharkräfte hinzu, so dass im Betrieb oft sogar mehrere Stützräder bzw. ein Fahrwerk am Pflug erforderlich sind. Normaler Weise sind diese Räder nicht angetrieben und folgen dem ziehenden Traktor rollend.

Wenn die nötige Zugkraft in besonderen Einsatzsituationen am Traktor mit Anhänger oder Arbeitsgerät zu groß wird, erhöht sich der Schlupf an den Traktorrädern und diese Räder drehen durch, womit der Dieselverbrauch steigt und die Arbeits- bzw. Fahrgeschwindigkeit sinkt. Um diesen Effekt zu verringern, beschreibt die Veröffentlichung "Simulation eines hydraulischen Hilfsantriebs für ein land- und forstwirtschaftliches Transportaggregat (TA)" aus der Zeitschrift "Landtechnik" 3/2007 ein Vierradtraktor mit einem Einachsanhänger, wobei die Achse des Anhängers mit einem hydraulischen Hilfsantrieb versehen ist. Bei diesem Hilfsantrieb treibt die von der Drehzahl des Traktormotors abhängige Zapfwelle eine Hydropumpe an, von der Druckmittel über ein 4/3-Wegeventil einem Hydromotor zugeführt wird. Über das Wegeventil wird eine der beiden möglichen Strömungsrichtungen des offenen Hydraulikkreislaufes gewählt, und der Hydromotor ist entsprechend für beide Strömungsrichtungen und somit für beide Drehrichtungen geeignet. Die Drehbewegung des Hydromotors wird dann mechanisch über ein Zusatzgetriebe, eine Kardanwelle und ein Differenzialgetriebe an die Anhängerräder übertragen.

Die Zuschaltung des Hilfsantriebs erfolgt automatisch, wenn ein Schlupf-Grenzwert an den angetriebenen Traktorrädern überschritten wird. Die Schlupfmessung erfolgt über einen Vergleich der Drehgeschwindigkeiten der angetriebenen Traktorräder und der während der Messung noch rollenden Räder des Anhängers.

Nachteilig an derartigen hydraulischen Hilfsantrieben ist, dass das Drehmoment und die Drehzahl der Anhängerräder bei Zuschaltung des Hilfsantriebes stets in einem unveränderlichen Verhältnis zum Drehmoment und zur Drehzahl der Zapfwelle stehen.

Demgegenüber liegt der Erfindung die Aufgabe zugrunde, einen hydraulischen Hilfsantrieb zu schaffen, bei dem das Drehmoment und damit die unterstützende Vortriebskraft am Antrieb des Arbeitsgerätes oder des Anhängers unabhängig von der Fahrgeschwindigkeit regelbar ist.

Dies Aufgabe wird gelöst durch eine Kombination aus mobiler Arbeitsmaschine und Arbeitsgerät bzw. Anhänger nach Patentanspruch 1.
Die erfindungsgemäße Kombination aus einer mobilen Arbeitsmaschine bzw. Zugmaschine und einem Arbeitsgerät oder Anhänger hat mindestens ein belastetes Rad, das am Arbeitsgerät oder am Anhänger angeordnet ist und einen drehmomentgeregelten Antrieb aufweist. Dadurch kann individuell je nach Betriebszustand der Kombination eine Schubkraft zugeschaltet und eingestellt werden. So kann die Gewichtskraft, die auf den Rädern des Arbeitsgerätes oder Anhängers lastet, sinnvoll genutzt werden. Insbesondere, wenn die angetriebenen Räder der ziehenden mobilen Arbeitsmaschine ungewollten Schlupf aufweisen, kann an dem oder den antreibbaren Rädern das Drehmoment zugeschaltet werden, so dass neben Betriebszeit der Kombination und Arbeitszeit des Fahrers auch Energie gespart wird.

Die Antriebsleistung des Rades oder der Räder kann in einer Ausführungsform der Erfindung von einer Zapfwelle der mobilen Arbeitsmaschine abgegriffen werden. Wenn der Zapfwelle ein stufenloses Getriebe vorgeschaltet ist, kann über dieses das Drehmoment am Rad unabhängig vom Betriebszustand des Motors eingestellt werden. Bei dieser Ausführungsform ist ein mechanische Welle und keine hydraulische Verbindungsleitung zur Übertragung der Antriebsleistung der mobilen Arbeitsmaschine zum Arbeitsgerät oder Anhänger nötig.

In einer weiteren Ausführungsform ist der erfindungsgemäße Antrieb hydraulisch ausgeführt. Dabei sind für die Übertragung der Antriebsleistung von der mobilen Arbeitsmaschine zum Arbeitsgerät oder Anhänger hydraulische Leitungen und keine mechanische Welle nötig.

Der hydraulische Antrieb kann durch einen geschlossenen Kreislauf gebildet sein, der eine arbeitsmaschinenseitige Verstellpumpe einer Mobilhydraulik und einen arbeitsgeräte- bzw. anhängerseitigen Hydromotor hat, der mit der Verstellpumpe in Wirkverbindung steht. So kann mit hohem Wirkungsgrad die Leistung der Verstellpumpe zum Hydromotor übertragen werden.

Der hydraulische Antrieb kann alternativ durch einen offenen Kreislauf gebildet sein.

Der Hydraulikkreislauf hat einen Hydromotor, der über eine Zumessblende, vorzugsweise ein stetig verstellbares Proportionalventil, und über eine der Zumessblende zugeordnete Individualdruckwaage mit Druckmittel versorgt wird. Durch das Proportionalventil kann die stufenlose Versorgung des Hydromotors mit Druckmittel gesteuert werden, und durch die Individualdruckwaage wird sicher gestellt, dass der Druckmittel-Volumenstrom auch bei erfindungsgemäß veränderlichem Drehmoment konstant bleibt.

Bei dem hydraulischen Antrieb ist der Eingang des Hydromotors über eine Vorlaufleitung (Zulauf) mit einem Arbeitsanschluss des Proportionalventils und der Ausgang des Hydromotors über eine Rücklaufleitung (Ablauf) mit einem anderen Arbeitsanschluss des Proportionalventils verbunden. Die Vorlaufleitung und die Rücklaufleitung sind zusätzlich über eine Leitung mit einem in Richtung zur Vorlaufleitung öffnenden Rückschlagventil verbunden. Über dieses Rückschlagventil kann Druckmittel abströmen, wenn der Hydromotor durch das gezogene Rad zur Pumpe wird.

Die Vorlaufleitung und die Rücklaufleitung können über ein Druckbegrenzungsventil verbunden werden, das den Druck in der Vorlaufleitung begrenzt und das bei Erreichen eines vorbestimmten Maximaldrucks in Richtung zur Rücklaufleitung öffnet. Dadurch wird Schaden durch Überdruck insbesondere an der Vorlaufleitung und am Hydromotor vermieden.

Vorzugsweise ist in der Vorlaufleitung und in der Rücklaufleitung je ein Senkenmodul als stetig verstellbares 2/2-Wegeventil angeordnet, wobei jedes Senkenmodul in Richtung einer gedrosselten Durchlassstellung vom Druck an je einem Steuerausgang, und in Richtung einer federvorgespannten Schließ- bzw. Rückschlagstellung vom Druck an je einem Arbeitsanschluss des Proportionalventils beaufschlagt ist. Das zulaufseitige Senkenmodul drosselt während der Beaufschlagung des Rades mit Antriebmoment den Druckmittelstrom in der Rücklaufleitung im Sinne einer Ablassregelung.

Vorzugsweise sind die Hydropumpe, die Druckwaage, das vorgesteuerte Proportionalventil und die Senkenmodule an der mobilen Arbeitsmaschine angeordnet, während der Hydromotor, das Rückschlagventil und das Druckbegrenzungsventil am Arbeitsgerät bzw. Anhänger angeordnet sind. So ist an der mobilen Arbeitsmaschine der Teil der erfindungsgemäßen Schaltung zu finden, der an modernen Traktoren der gehobenen Leistungsklasse oft bereits als Standard vorgesehen ist.

Vorzugsweise ist zwischen dem Hydromotor und dem antreibbaren Rad ein Freilauf angeordnet, durch den verhindert wird, dass der Hydromotor zur Pumpe umfunktioniert wird, wenn das Rad gezogen wird. So kann das Rad ungehemmt rollen, und es wird keine unnötige Wärme im hydraulischen System erzeugt.

Vorzugsweise ist der Hydromotor ein Radialkolbenmotor, da dieser Motorentyp für niedrige Drehzahlen und hohe Drehmomente geeignet ist, so wie sie in der erfindungsgemäßen Kombination auftreten.

In der Vorlaufleitung und in der Rücklaufleitung ist je ein Schnellkuppler angeordnet, damit ein einfacher Ab- und Anbau des Arbeitsgerätes bzw. ein einfaches Ab- und Ankuppeln des Anhängers möglich ist.

Die Einstellung des Drehmoments kann manuell erfolgen, so dass der Bediener bzw. Fahrer die zusätzliche Schubkraft über eine Bedienelement jederzeit selbst wählen kann.

Alternativ kann die Einstellung bzw. Regelung des Drehmoments automatisch erfolgen, so dass der Kombination ohne Zutun des Fahrers stets optimale zusätzliche Antriebskraft zur Verfügung steht.

Die automatische Einstellung bzw. Regelung des Drehmoments kann in Abhängigkeit von einem wählbaren Maximalschlupf an dem mindestens einen antreibbaren Rad des Arbeitsgerätes bzw. des Anhängers begrenzt werden. Dabei wird der Schlupf am angetriebenen Rad durch einen Abgleich seiner mit einem Drehzahlsensor ermittelten Drehzahl einerseits und der mit einem Geschwindigkeitssensor (z.B. Radar) ermittelten Fahrgeschwindigkeit der mobilen Arbeitsmaschine bzw. der Kombination andererseits berechnet. Alternativ kann der Schlupf auch durch eine Druckmessung und durch eine Volumenstrommessung des dem Hydromotor zugeführten Druckmittels bestimmt werden. In beiden Fällen wird ein uneffektives Durchdrehen des angetriebenen Rades automatisch vermieden.

Vorzugsweise ist die mobile Arbeitsmaschine ein Traktor und das Arbeitsgerät ist ein Aufsattelgerät. Insbesondere als Arbeitsgerät geeignet ist ein Aufsattelpflug oder ein Karrenpflug oder einer Kombination aus beiden Pflugtypen. Pflüge weisen zusätzlich zu ihrer Gewichtskraft eine nach unten gerichtete Kraft auf, die von dem durch die Schare angehobenen Erdreich herrührt. Somit können bei Pflügen besonders hohe zusätzliche Antriebsmomente an dem oder an den Stützrädern bereitgestellt und genutzt werden.

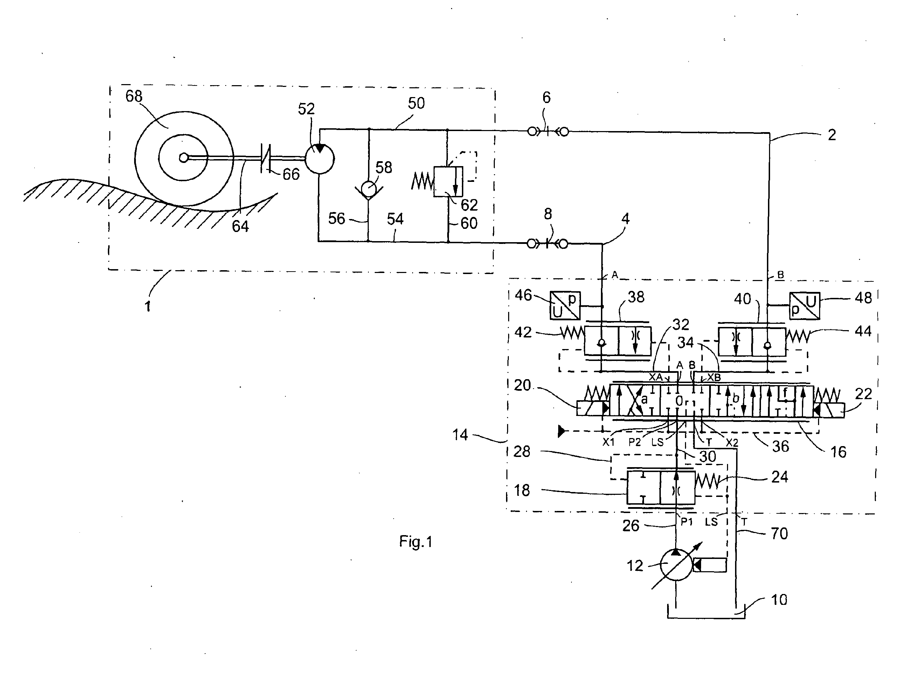

Anhand der Figur wird im Folgenden zunächst der Aufbau der bevorzugten Ausführungsform der erfindungsgemäßen Kombination aus mobiler Arbeitsmaschine (insbesondere Traktor) und Arbeitsgerät beschrieben.

Bei der beschriebenen Lösung ist ein Arbeitsgerät mit einem hydraulischen Antrieb versehen, der mit der Mobilhydraulik des Traktors in Wirkverbindung steht.

Ein offener hydraulischer Kreislauf der Einheit weist zwei Hauptteile auf: eine hydraulische Schaltung, die an der Arbeitsmaschine angeordnet ist, und eine Anordnung 1, die am Arbeitsgerät angeordnet ist. Zwischen der arbeitsmaschinenseitigen Hydraulik und der arbeitsgeräteseitigen Anordnung 1 sind hydraulische Verbindungen 2, 4, 6 und 8 angeordnet.
Die arbeitsmaschinenseitige Hydraulik besteht im Wesentlichen aus einem Tank 10, einer Hydropumpe 12 und einem Mobilsteuerblock mit einer Wegeventilsektion 14, die dem Arbeitsgeräteantrieb zugeordnet ist.

Der Aufbau des Mobilsteuerblocks mit der Wegeventilsektion 14 ist im Prinzip aus Anwendungen für EHR bekannt, wie sie in der DE 10 2005 005 314 A1 beschrieben ist, so dass in der vorliegenden Anmeldung nur die zum Verständnis der Erfindung wesentlichen Elemente beschrieben werden.
Die Wegeventilsektion 14 ist als LS-System ausgeführt, so wie es bei der "SB23LS EHS2" im "RD-Merkblatt 130/02.07" der Anmelderin beschrieben ist.
Bei derartigen LS-Systemen wird der Druck der Hydropumpe 12 stets so eingestellt, dass er um eine vorbestimmte Druckdifferenz oberhalb des höchsten Lastdrucks des hydraulischen Verbrauchers liegt. Prinzipiell bestehen derartige LS-Wegeventilsektionen aus einem vorgesteuerten Proportionalventil 16, dem eine Individual-Druckwaage 18 vorgeschaltet ist. Beide Bauelemente sind üblicher Weise in eine Ventilscheibe des Mobilsteuerblocks integriert. Bei dem in der Figur dargestellten Ausführungsbeispiel erfolgt die Verstellung des Proportionalventils 16 elektrohydraulisch, beispielsweise über Druckreduzierventile 20, 22, die über einen Proportionalmagneten verstellbar sind. Durch Verstellung des Proportionalventils 16 wird eine Zulaufmessblende eingestellt, wobei über die Druckwaage 18 der Druckabfall über der Zulaufmessblende lastunabhängig konstant gehalten werden kann. Dieser Druckabfall entspricht dem Druckäquivalent einer Druckwaagenfeder 24, die die Druckwaage 18 in Richtung der gedrosselten Durchgangstellung beaufschlagt. Die Druckwaage 18 ist ein stetig verstellbares 2/2-Wegeventil.
Die Wegeventilsektion 14 hat einen an die Hydropumpe 12 angeschlossenen Druckanschluss P₁, einen Lastdruck-Anschluss LS, einen mit dem Tank 10 verbundenen Rücklaufanschluss T sowie zwei Arbeitsanschlüsse A, B. Vom Druckanschluss P₁ der Wegeventilsektion 14 führt ein Pumpenkanal 26 zum Eingangsanschluss der Druckwaage 18, die in Öffnungsrichtung von der Kraft der Feder 24 und dem hinter der Zumessblende abgegriffenen Lastdruck an der arbeitsgeräteseitigen Anordnung 1 beaufschlagt ist. Die Druckwaage 18 ist in Richtung einer Verringerung des Öffnungsquerschnitts durch den Druck am Ausgang der Druckwaage 18 beaufschlagt, der über einen Steuerkanal 28 von einem den Ausgangsanschluss der Druckwaage 18 mit einem Eingangsanschluss P₂ des Proportionalventils 16 verbindenden Zulaufkanal 30 abgegriffen ist.

Das Proportionalventil 16 ist als 4/4-Wegeventil ausgeführt und hat einen Druckanschluss P₂, einen Tankanschluss T sowie zwei Ausgangsanschlüsse A, B, an die Kanäle 32, 34 angeschlossen sind. Das Proportionalventil 16 ist des Weiteren mit zwei Steueranschlüssen X1, X2 ausgeführt, über die der Steuerdruck in einer Steuerölversorgungsleitung 36 abgegriffen werden kann.

Zwischen dem Proportionalventil 16 und der arbeitsgeräteseitigen Anordnung 1 sind zwei Senkenmodule 38, 40 angeordnet, die jeweils in ihrer federvorgespannten Grundposition als entsperrbares Rückschlagventil zur leckölfreien Versorgung der arbeitsgeräteseitigen Anordnung 1 dienen. Bei ziehender Last steuern die Senkenmodule 38, 40 in einer Regelposition den von der arbeitsgeräteseitigen Anordnung 1 zurückströmenden Druckmittelvolumenstrom im Sinne einer Ablaufregelung. Bei einer positiven Last ist der Rücklauf komplett geöffnet und drosselt nicht. Jedes Senkenmodul 38, 40 ist von einer Feder 42, 44 und durch den Druck in den Kanälen 32, 34 jeweils in Richtung der Rückschlagposition und einen Druck in der Steuerölversorgungsleitung 36 in Richtung seiner Drosselstellung beaufschlagt. Der die Senkenmodule 38, 40 in Drosselrichtung beaufschlagende Druck wird über Steueranschlüsse XA, XB des Proportionalventils 16 abgegriffen.

Der Druck im Druckmittelströmungspfad zwischen den Senkenmodulen 38, 40 und den Arbeitsanschlüssen A, B wird über Drucksensoren 46, 48 erfasst.

Vom Arbeitsanschluss B der Wegeventilsektion 14 führt eine arbeitsmaschinenseitige Vorlaufleitung 2 über einen Schnellkuppler 6 über eine arbeitsgeräteseitige Vorlaufleitung 50 zum Eingangsanschluss eines Hydromotors, der vorzugsweise von einem Konstantmotor 52 gebildet ist.
Vom Ausgangsanschluss des Konstantmotors 52 führt eine arbeitsgeräteseitige Rücklaufleitung 54 über einen weiteren Schnellkuppler 8 zu einer arbeitsmaschinenseitigen Rücklaufleitung 4, die mit dem Arbeitsanschluss A der Wegeventilsektion 14 verbunden ist.
In einer Verbindungsleitung 56 zwischen der arbeitsgeräteseitigen Vorlaufleitung 50 und der arbeitsgeräteseitigen Rücklaufleitung 54 ist ein Rückschlagventil 58 angeordnet, das in Richtung von der der Rücklaufleitung 54 zur Vorlaufleitung 50 öffnet.
Weiterhin ist in einer Druckbegrenzungsleitung 60 zwischen der Vorlaufleitung 50 und der Rücklaufleitung 54 im Arbeitsgerät ein Druckbegrenzungsventil 62 angeordnet, das den Druck in der Vorlaufleitung 50 begrenzt und bei Überschreiten eines vorbestimmten Maximaldrucks den Durchfluss in Richtung Rücklaufleitung 54 freigibt.

Eine Abtriebswelle 64 des Konstantmotors 52 ist über einen Freilauf 66 mit einem antreibbaren Rad 68 des Arbeitsgerätes verbunden, wobei der Freilauf 66 eine Übertragung einer Drehbewegung bzw. eines Drehmomentes vom antreibbaren Rad 68 zum Konstantmotor 52 verhindert.

Im Folgenden werden die Betriebszustände der hydraulischen Schaltung beschrieben. Die Betriebszustände werden im Wesentlichen über Einstellung des Proportionalventils 16 gewählt, wobei diese Einstellung manuell von der Bedienperson oder automatisch erfolgen kann. In beiden Varianten kann der Regelbereich des Drehmoments von einem Maximalschlupf am antreibbaren Rad 68 des Arbeitsgerätes begrenzt sein.

In der federvorgespannten Grundposition 0 des vorgesteuerten stetig verstellbaren Proportionalventils 16 sind die Anschlüsse A, B, P₂, XA, XB, X1 und X2 abgesperrt, und der LS-Anschluss ist über Anschluss T mit einem Ablaufkanal 70 verbunden. Diese Stellung wird gewählt, wenn das Rad 68 von keinem Antriebsmoment beaufschlagt werden soll. Durch den Freilauf 66 ist sicher gestellt, dass das rollende Rad kein Drehmoment auf den Hydromotor überträgt. Da der LS-Anschluss einen minimalen Steuerdruck aufweist, wird die Leistung der Pumpe 12 verringert, falls keine anderen Verbraucher der Mobilhydraulik mit Druckmittel versorgt werden.

Bei Bestromen des in der Figur linken Vorsteuerventils 20 (Druckreduzierventil) wird das Proportionalventil 16 stetig in Richtung seiner mit a gekennzeichneten Positionen verstellt und der Druckanschluss P₂ mit dem Arbeitsanschluss B und der Arbeitsanschluss A mit dem Tankanschluss T verbunden. Des Weiteren ist dann die Steuerölversorgungsleitung 36 über den Anschluss X1 mit dem Anschluss XA verbunden, so dass das Senkenmodul 38 durch den Steueröldruck in Drosselrichtung beaufschlagt ist (in der Figur nach links). Die beiden Anschlüsse XB und X2 sind abgesperrt.
Diese Stellungen des Proportionalventils 16 werden gewählt, wenn das Rad 68 mit Antriebsmoment beaufschlagt werden soll. Das Druckmittel strömt über den Arbeitsanschluss B des Proportionalventils 16 durch das als Rückschlagventil geschaltete und somit komplett aufgesteuerte Senkenmodul 40 zum Arbeitsanschluss B der Wegeventilsektion 14. Dadurch wird der Konstantmotor 52 mit Druckmittel beaufschlagt und treibt im gezeigten Ausführungsbeispiel über die Welle 64 das Rad 68 an. Durch die verschiedenen Stellungen a des Proportionalventils 16 ist der Druck am Arbeitsanschluss B der Wegeventilsektion 14 einstellbar. Auf diesem Wege ist der Druck am Eingang des Konstantmotors 52 änderbar und somit ist sein abgegebenes Drehmoment stetig verstellbar. Dabei ist das Drehmoment von der Drehzahl des Rades 68 und von der Drehzahl des Motors der mobilen Arbeitsmaschine unabhängig einstellbar.

Das vom Konstantmotor 52 zurückströmende Druckmittel gelangt über das aufgesteuerte Senkenmodul 38 über den Anschluss T des Proportionalventils 16 zurück zum Tank 10 des offenen Hydraulikkreislaufes.

Bei Verstellung des Proportionalventils 16 in Richtung der mit b gekennzeichneten Positionen werden entsprechend der Druckanschluss P₂ mit dem Arbeitsanschluss A und der Arbeitsanschluss B mit dem Tankanschluss T sowie der Steueranschluss X2 mit dem Steuerausgangsanschluss XB verbunden. Die Anschlüsse XA und X1 sind abgesperrt. Dementsprechend wird das Senkenmodul 40 durch den Steuerdruck in der Steuerölversorgungsleitung 36 in Richtung seiner Drosselstellung (in der Figur nach rechts) beaufschlagt, um eine Ablaufregelung zu ermöglichen.
Diese Stellungen des Proportionalventils 16 werden nur dann benötigt, wenn der Bediener die Schnellkuppler 6, 8 gegenüber der in der Figur gezeigten Anordnung versehentlich vertauscht hat, so dass die Leitungen 2 und 54 und die Leitungen 4 und 50 jeweils miteinander verbunden sind. Dann wären die Stellungen b statt der Stellungen a nötig, um ansonsten die gleiche Wirkungsweise des drehmomentgeregelten Antriebs des Rades 68 zu erreichen, wie oben beschrieben.

Bei Verstellung des Proportionalventils 16 weiter nach links in die mit f gekennzeichnete Position wird die arbeitsgeräteseitige Anordnung 1 in eine auch als Schwimmstellung bekannte Stellung gebracht. Dabei sind die beiden Arbeitsanschlüsse A, B gemeinsam mit dem Tankanschluss T verbunden, so dass die Zirkulation des Druckmittels in der arbeitsgeräteseitigen Anordnung 1 in beide Richtungen möglich ist. In dieser Stellung ist der Druckanschluss P₂ des Proportionalventils 16 abgesperrt, so dass keine Beaufschlagung der arbeitsgeräteseitigen Anordnung 1 mit Druckmittel erfolgt. Durch die jeweiligen Verbindung von X1 mit XA und von X2 mit XB schaltet der Steueröldruck der Leitung 36 die beiden Senkenmodule 38, 40 in ihre Ablauf-Drosselstellungen.
Diese Stellung ist bei der vorzugsweise verbauten Ventilanordnung "SB23LS EHS2" der Anmelderin standardmäßig vorgesehen. Diese Stellung wird aber in dem in der Figur gezeigten Ausführungsbeispiel nicht benötigt, da der Freilauf 66 verbaut ist. Durch den Freilauf 66 ist sicher gestellt, dass bei zu langsam angetriebenem oder rollendem Rad 68 der Konstantmotor 52 nicht als Pumpe fungieren kann.

Abweichend von dem oben beschriebenen Ausführungsbeispiel kann das Arbeitsgerät auch ein Anhänger sein. Weiterhin kann das Arbeitsgerät oder der Anhänger statt einem antreibbaren Rad 68 auch mehrere antreibbare Räder aufweisen.
Als Arbeitsgerät ist auch ein Grubber oder ein eggenähnliches Gerät denkbar, bei dem eine oder mehrere belastete Nachlaufwalzen den erfindungsgemäten hydraulischen Antrieb aufweisen.
Statt einer Welle 64 mit einem Rad 68 so wie in der Figur gezeigt können auch Wellen mit mehreren - vorzugsweise 2 - Rädern vom Hydromotor angetrieben werden.
Die Kombination aus mobiler Arbeitsmaschine und Arbeitsgerät oder Anhänger kann auch mehrere der in der Figur dargestellten arbeitsgeräteseitigen Anordnungen 1 mit jeweils einer Wegeventilsektion 14 und jeweils mit den
Verbindungen 2, 4, 6, 8, 50, 54 aufweisen, z.B. um mehrere getrennt antreibbare und regelbare Räder zu erhalten. Weiterhin kann die Antriebswelle 64 entfallen, wenn das Rad 68 direkt an dem Hydromotor montiert sind.
Das Druckbegrenzungsventil 62 kann entfallen, wenn arbeitsmaschinenseitig sichergestellt ist, dass der Druck am Arbeitsanschluss B einen bestimmten Maximalwert nicht überschreitet.
Die Schaltstellungen b des Proportionalventils 16 können entfallen, wenn sichergestellt ist, dass der Bediener der Kombination die Schnellkuppler 6, 8 stets paarweise richtig zuordnet, so dass stets die Leitung 50 als arbeitsgeräteseitige Vorlaufleitung fungiert.
Die Schaltstellung f des in der Figur dargstellten Proportionalventils 16 kann entfallen, wenn - wie in der Figur gezeigt - das Rückschlagventil 58 oder vorzugweise der Freilauf 66 verbaut ist. Durch eine der beiden Alternativen muss sicher gestellt sein, dass bei zu langsam angetriebenen oder rollendem Rad 68 der Hydromotor entweder durch den Freilauf nicht als Pumpe fungieren kann, oder dass das durch den Hydromotor geförderte Druckmittel über das Rückschlagventil 58 abströmen kann.
Der Freilauf 66 kann entfallen, wenn sichergestellt ist, dass die Kombination aus mobiler Arbeitsmaschine und Arbeitsgerät oder Anhänger eine bestimmte Maximalgeschwindigkeit nicht überschreitet, um den Hydromotor nicht zu beschädigen.

Die Drucksensoren 46, 48 können prinzipiell entfallen. Sie werden jedoch zur Verbesserung der Anlagensicherheit beispielsweise zum Erkennen eines Schlauch bruchs oder dergleichen eingesetzt.

In einem anderen Ausführungsbeispiel der erfindungsgemäßen Anordnung wird das Drehmoment am angetriebenen Rad 68 mechanisch von einer Zapfwelle der mobilen Arbeitsmaschine zum angetriebenen Rad 68 übertragen. Die erfindungsgemäße Einstellung des Drehmoments wird bei diesem Ausführungsbeispiel durch ein arbeitsmaschinenseitiges stufenloses Getriebe ermöglicht, das zwischen dem Motor und der Zapfwelle der mobilen Arbeitsmaschine angeordnet ist.

## Patentansprüche

1. Kombination aus einer mobilen Arbeitsmaschine und einem Arbeitsgerät oder Anhänger mit einem belasteten Fahrwerk, wobei dieses zumindest ein mittels eines Antriebs antreibbares Rad (68), Walze oder dergleichen aufweist, **dadurch gekennzeichnet, dass** der Antrieb drehmomentgeregelt ist.

2. Kombination nach Anspruch 1, wobei der Antrieb mittels einer Zapfwelle der mobilen Arbeitsmaschine erfolgt, der ein stufenloses Getriebe vorgeschaltet ist.

3. Kombination nach einem der Anspruch 1 mit einem hydraulischen Antrieb.

4. Kombination nach Anspruch 3, wobei der hydraulische Antrieb eine Verstellpumpe und einen Hydromotor hat.

5. Kombination nach Anspruch 4, wobei der den Hydromotor über eine Zumessblende und einer dieser zugeschalteten Individualdruckwaage (18) mit Druckmittel versorgbar ist.

6. Kombination nach Anspruch 5, wobei die Zumessblende ein stetig verstellbares Proportionalventil (16) ist, dem die Individualdruckwaage (18) vorgeschaltet ist, die in Schließrichtung vom Druck stromaufwärts der Zumessblende und in Öffnungsrichtung vom Druck stromabwärts der Zumessblende beaufschlagt ist.

7. Kombination nach Anspruch 6, wobei der Hydromotor über eine Vorlaufleitung (2, 50) mit einem Arbeitsanschluss (B) des Proportionalventils (16) und über eine Rücklaufleitung (4, 54) mit einem weiteren Arbeitsanschluss (A) des Proportionalventils (16) verbunden ist, wobei die Vorlaufleitung (2, 50) und die Rücklaufleitung (4, 54) über eine Leitung (56) mit einem in Richtung zur Vorlaufleitung (2, 50) öffnenden Rückschlagventil (58) verbunden ist.

8. Kombination nach Anspruch 7, wobei die Vorlaufleitung (2, 50) und die Rücklaufleitung (4, 54) über ein den Druck in der Vorlaufleitung (2, 50) begrenzendes und in Richtung zur Rücklaufleitung (4, 54) öffnendes Druckbegrenzungsventil (62) verbunden ist.

9. Kombination nach einem der Ansprüche 7 oder 8, wobei in der Vorlaufleitung (2, 50) und in der Rücklaufleitung (4, 54) je ein Senkenmodul (38, 40) angeordnet ist, wobei jedes Senkenmodul als stetig verstellbares 2/2-Wegeventil ausgebildet ist, das in Richtung einer gedrosselten Durchlassstellung vom Druck an einem Ausgang (XA, XB), und in Richtung einer federvorgespannten Schließstellung vom Druck an einem Arbeitsanschluss (A, B) des Proportionalventils (16) beaufschlagt ist.

10. Kombination nach Anspruch 9, wobei die Hydropumpe (12), die Druckwaage (18), das vorgesteuerte Proportionalventil (16) und die Senkenmodule (38, 40) an der mobilen Arbeitsmaschine angeordnet sind, und wobei der Hydromotor, das Rückschlagventil (58) und das Druckbegrenzungsventil (62) am Arbeitsgerät bzw. Anhänger angeordnet sind.

11. Kombination nach einem der Ansprüche 4 bis 10, wobei zwischen dem Hydromotor und dem antreibbaren Rad (68) oder der Walze ein Freilauf (66) angeordnet ist.

12. Kombination nach einem der Ansprüche 4 bis 11, wobei der Hydromotor ein Radialkolbenmotor ist.

13. Kombination nach einem der Ansprüche 7 bis 12, wobei in der Vorlaufleitung (2, 50) und in der Rücklaufleitung (4, 54) je ein Schnellkuppler (6, 8) angeordnet ist.

14. Kombination nach einem der vorherigen Ansprüche, wobei die Einstellung des Drehmoments manuell von der Bedienperson erfolgt.

15. Kombination nach einem der vorherigen Ansprüche, wobei die Einstellung bzw. Regelung des Drehmoments automatisch erfolgt.

16. Kombination nach Anspruch 15, wobei die Einstellung bzw. Regelung des Drehmoments von einem maximalen Drehmoment begrenzt ist, das in Abhängigkeit von einem Maximalschlupf am antreibbaren Rad (68) oder an der Walze ermittelt wird, wobei der Schlupf aus den Signalen eines Drehzahlsensors am Rad (68) oder an der Walze und eines Geschwindigkeitssensors an der mobilen Arbeitsmaschine oder aus dem Druck und dem Volumenstrom des dem Hydromotor zugeführten Druckmittels ermittelbar ist.

17. Kombination nach einem der vorherigen Ansprüche, wobei die mobile Arbeitsmaschine ein Traktor ist.

18. Kombination nach einem der vorherigen Ansprüche, wobei das Arbeitsgerät von einem Aufsattelpflug oder einem Karrenpflug oder einer Kombination aus beiden Pflugtypen gebildet ist.
